# EUROPÄISCHE PATENTSCHRIFT

(11) **EP 2 990 836 B1**
(45) Veröffentlichungstag und Bekanntmachung des Hinweises auf die Patenterteilung: **06.12.2017**
(21) Anmeldenummer: 15159635.0
(22) Anmeldetag: 18.03.2015
(51) Int. Cl.: G01V 8/20, F16P 3/02, F16P 3/14

(54) **Vorrichtung zur Überwachung einer Maschinenbewegung und Verfahren zum Überwachen einer Maschinenbewegung**
Device for monitoring a machine movement and method for monitoring a machine movement
Dispositif de surveillance d'un mouvement de machine et procédé de surveillance d'un mouvement de machine

(30) Priorität: 15.08.2014 DE 102014111694
(43) Veröffentlichungstag der Anmeldung: 02.03.2016
(73) Patentinhaber: Fraba B.V., 6416 SG Heerlen (NL)
(72) Erfinder: Scholten, Lucien, 40699 Erkrath (DE)
(74) Vertreter: Patentanwälte ter Smitten Eberlein-Van Hoof Rütten Partnerschaftsgesellschaft mbB

(56) Entgegenhaltungen:
- EP-A1- 0 875 873
- EP-A1- 1 993 081
- DE-A1- 10 038 025

## Beschreibung

Die Erfindung betrifft eine Vorrichtung zur Überwachung einer Maschinenbewegung eines beweglichen Konstruktionselements, insbesondere eines Tors oder einer Tür, mit einer Erfassungseinrichtung, die zumindest eine Sendereinheit zum Senden eines optischen Signals und eine Empfängereinheit zum Empfangen des optischen Signals aufweist, und einer Steuerungseinrichtung, die bei Vorliegen eines an der Empfängereinheit empfangenen Signals die Maschinenbewegung des Konstruktionselements freigibt und bei Ausbleiben eines an der Empfängereinheit empfangenen Signals einen Auslöseimpuls zum Stoppen der Maschinenbewegung des Konstruktionselements ausgibt. Ferner betrifft die Erfindung ein Verfahren zum Überwachen einer Maschinenbewegung eines beweglichen Konstruktionselements.

Derartige Schutz- und Überwachungseinrichtungen werden häufig dort verwendet, wo ein Bewegungsbereich eines Konstruktionselements einer Maschine oder einer Vorrichtung zur Vermeidung von Kollisionen überwacht werden muss. Typische Anwendungsgebiete sind Durchgänge oder Durchfahrten mit automatisch schließenden bzw. motorisch angetriebenen Industrietoren.

Aus dem Stand der Technik sind zahlreiche solcher Überwachungseinrichtungen bekannt. So beschreibt zum Beispiel die DE 20 2008 009 320 U1 eine Überwachungsvorrichtung mit einer optischen Schutzvorrichtung, die einen Überwachungssensor beinhaltet, um beispielsweise Gefahren durch bewegte Maschinenteile im Torbereich zu vermeiden. Desweiteren sind aus der DE 37 28 354 Schutzeinrichtungen an Toranlagen, bestehend aus einer Sendereinheit, einer Empfängereinheit, einer Steuereinheit sowie Lichtquellen bekannt.

Aufgrund der Robustheit und der einfachen Handhabbarkeit sind solche Überwachungsvorrichtungen häufig mit optischen Erfassungseinrichtungen zum Erfassen eines möglichen Hindernisses ausgestattet. Diese Erfassungseinrichtungen weisen zumeist eine Sendereinheit und eine Empfängereinheit auf, zwischen welchen ein optisches Signal, beispielsweise ein Lichtstrahl, übermittelt wird. Dadurch kann ein Gefahrenbereich, in dem eine Maschinenbewegung erfolgt, stetig überwacht werden. Wird ein solches optisches Signal durch ein Hindernis im Gefahrenbereich unterbrochen, wird von der Steuerungseinrichtung ein Auslöseimpuls zum Stoppen der Maschinenbewegung ausgegeben. Aus der DE 100 38 025 A1 ist eine Überwachungselektronik eines Lichtschrankensystems bekannt, die durch Auswertung der empfangenen Lichtstärke erkennt, ob ein Lichtstrahl als unterbrochen oder als frei zu interpretieren ist. Hierbei können jedoch Fremdlichter oder Umspiegelungen zu Fehlinterpretationen führen. Zur Erkennung solcher Umspiegelungen von Objekten ist aus der EP 1 993 081 A1 ein Lichtschrankensystem mit einer ortsauflösenden Detektion bekannt.

Ein bekanntes Problem bei solchen Erfassungseinrichtungen sind Fremdlichter oder sonstige den Lichtweg verändernde Situationen, die ein Fehl- oder Nichterkennen eines Lichtsignals hervorrufen können. Solche Situationen resultieren beispielsweise daraus, dass die Sendereinheit und die Empfängereinheit bauartbedingt über eine gewisse seitliche Abstrahlung des gesendeten bzw. empfangenen optischen Signals verfügen - ähnlich eines Scheinwerfers, der einen Lichtkegel mit einem Abstrahlwinkel erzeugt. Bei bekannten Vorrichtungen sind daher üblicherweise bestimmte konstruktive Maßnahmen an der Sender- und Empfängereinheit vorgesehen, wie die Anordnung mehrerer separater Sender-/Empfängereinheiten, ein relativ geringer Abstrahlwinkel und/oder eine relativ exakte Ausrichtung zueinander.

Dies hat jedoch den Nachteil, dass solche Vorrichtungen in der Verfügbarkeit und Einsatzfähigkeit eingeschränkt und in der Herstellung und Montage kostenintensiv sind.

Der Erfindung liegt daher die Aufgabe zugrunde, eine Vorrichtung zur Überwachung einer Maschinenbewegung eines beweglichen Konstruktionselements bereitzustellen, mit der die oben genannten Nachteile im Stand der Technik überwunden werden können, und die insbesondere eine sichere und effektive Überwachung des Gefahrenbereichs ermöglicht und auch bei einer Überlagerung von optischen Signalen und bei Auftreten von Reflexionen einen wirkungsvollen Schutz gegen eine Kollision mit einem Hindernis bietet. Ferner soll die Vorrichtung relativ kostengünstig sein.

Die Lösung der Aufgabe erfolgt erfindungsgemäß durch eine Vorrichtung mit den Merkmalen des Anspruchs 1.

Erfindungsgemäß weist die Steuerungseinrichtung eine Auswerteeinheit zum Auswerten einer Signalstärke des an der Empfängereinheit empfangenen Signals auf, wobei die Auswerteeinheit eine erste Schwellenwertmesseinrichtung umfasst, die geeignet ist, eine Signalstärke des an der Empfängereinheit empfangenen Signals zu erfassen und bei Detektieren einer Unterschreitung eines vorgegebenen Schwellenwertes der Signalstärke einen Auslöseimpuls zum Stoppen der Maschinenbewegung des Konstruktionselements ausgibt.

Die Steuerungseinrichtung kann an dem Rahmen oder an dem beweglichen Konstruktionselement angeordnet sein und ist zur Ansteuerung eines Antriebsmotors des beweglichen Konstruktionselements bzw. einer Maschine bevorzugt mit einer Motorelektronik des Antriebsmotors verbunden. Dadurch kann beim Erfassen eines Hindernisses ein Auslöseimpuls zum Stoppen des Konstruktionselements unmittelbar an den Antriebsmotor geleitet werden, so dass eine zeitliche Verzögerung bis zum Stillstand des Konstruktionselements minimiert werden kann.

Die Auswerteeinheit ist vorzugsweise im Bereich der Empfängereinrichtung angeordnet und kann als Eingangssignal ein das empfangene optische Signal über die Zeit wiedergebendes Analogsignal erhalten. Dadurch kann in der Auswerteeinheit das tatsächlich an der Empfängereinheit empfangene Signal ausgewertet werden. Hierzu weist die Auswerteeinheit eine erste Schwellenwertmesseinrichtung auf, die insbesondere die signalstärke des empfangenen optischen Signals auswertet. Die Signalstärke des optischen Signals kann insbesondere darüber Aufschlüsselung liefern, ob ein Hindernis im Gefahrenbereich oder lediglich eine Reflexion bzw. optische Überlagerung des optischen Signals vorliegt. Insbesondere kann anhand der Signalstärke festgestellt werden, ob trotz Empfang eines Signals an der Empfängereinheit eine Unterbrechung des direkten Signals vorliegt.

Bei einer Unterbrechung des direkten Signals bzw. des Hauptstrahls und einer Weiterleitung eines leidglich reflektierten Teils des Signals wird an der Empfängereinheit in der Regel ein abgeschwächtes Signal empfangen. Dieses schwächere Signal kann mittels der ersten Schwellenwertmesseinrichtung erfasst werden, so dass ein Auslösesignal zum Stoppen der Bewegung nicht nur bei einem vollständigen Ausbleiben eines zu empfangenden Signals ausgegeben werden kann, sondern bereits dann, wenn eine definierte Abschwächung des Signals bzw. der Signalstärke erkannt wird. Dazu wird die erste Schwellenwertmesseinrichtung insbesondere dahingehend kalibriert, dass das bei freiem Fahrtweg des Konstruktionselements zu empfangene optische Signal einem Summenwert aus dem direkten Signal und einem reflektierten Signalteil entspricht. Da eine Reflexion oder Überlagerung des optischen Signals stets kleinere Schwankungen in der Intensität bzw. Stärke des Signals bewirkt, ist der Schwellenwert der Signalstärke zur Auslösung des Stoppens der Maschinenbewegung entsprechend angepasst. Insbesondere ist eine ausreichend große Abschwächung der signalstärke zum Stoppen der Maschinenbewegung erforderlich. Daher kann der Schwellenwert als Anteil eines Mittelwertes der empfangenen Signalstärke berechnet sein. Wird der Schwellenwert dementsprechend von oben nach unten durchlaufen, das heißt unterschritten, erfolgt ein Ausgeben eines Auslöseimpulses zum Stoppen der Maschinenbewegung.

Der Auslöseimpuls kann zu einem vollständigen Stillstand bzw. einem vollständigen Abschalten der Bewegung des Konstruktionselements führen. Eine Weiterfahrt ist dann beispielsweise erst nach einer Bestätigung der Freigabe wieder möglich, zum Beispiel durch Drücken eines Knopfes. Alternativ kann ein Freigabemodul vorgesehen sein, dass eine Weiterfahrt nach Erlöschen des Auslösesignals wieder freigibt oder auch eine zeitliche Verzögerung bis zu einer Weiterfahrt vornimmt, beispielsweise wenn das Signal die vorgegebene Signalstärke wieder erreicht hat. Dadurch kann die Bewegung des Konstruktionselements ohne zusätzliche Bestätigung vollautomatisch ablaufen. Somit wird eine sichere und effektive Überwachung des Gefahrenbereichs und ein vollautomatisches Betreiben der Maschine ermöglicht.

Erfindungsgemäß weist die Auswerteeinheit eine zweite Schwellenwertmesseinrichtung auf, die geeignet ist, eine Änderungsgeschwindigkeit der Signalstärke des an der Empfängereinheit empfangenen Signals zu erfassen und bei Detektieren einer Überschreitung eines vorgegebenen Schwellenwertes der Änderungsgeschwindigkeit der Signalstärke einen Auslöseimpuls zum Stoppen der Maschinenbewegung des Konstruktionselements ausgibt. Die zweite Schwellenwertmesseinrichtung kann insbesondere parallel zu der ersten Schwellenwertmesseinrlchtung angeordnet sein, so dass das empfangene Signal sowohl in der ersten Schwellenwertmesseinrichtung als auch in der zweiten Schwellenwertmesseinrichtung parallel überwacht wird. Dadurch kann eine zeitliche Verzögerung zum Stoppen der Maschinenbewegung minimiert werden und die Überwachungsvorrichtung sicherer und effizienter arbeiten.

Unter der Änderungsgeschwindigkeit der Signalstärke ist die zeitliche Änderung der Signalstärke zu verstehen. Eine relativ schnelle bzw. sprunghafte Änderung der Signalstärke, deutet insbesondere darauf hin, dass ein in dem überwachten Bewegungsbereich des Konstruktionselements auftretendes Hindernis vorliegt, das einen direkten Signalstrahl unterbricht. Daher wird bei einer relativ sprunghaften Änderung der Signalstärke einen Auslöseimpuls zum Stoppen der Maschinenbewegung des Konstruktionselements ausgegeben. Ist dagegen die Änderung der Signalstärke relativ langsam, kann dies von einem zusätzlich einfallenden Licht, beispielsweise eines vorbeifahrenden Fahrzeugs, oder aufgrund von Vibrationen der Erfassungseinrichtung bei der Bewegung des Konstruktionselements verursacht sein. Insbesondere kann es bei sehr breiten Durchfahrten bzw. Toren vorkommen, dass die Sendereinheit und/oder die Empfängereinheit durch Vibrationen relativ zueinander bewegt werden und das direkte optische Signal im Bereich des Abstrahlwinkels hin und her pendelt und sich dadurch die empfangene Signalstärke ändert. Ferner können Verschmutzungen an der Erfassungseinrichtung, wie zum Beispiel eine Staubschicht, Luftverunreinigungen, die beispielsweise durch Abgase von Fahrzeugen hervorgerufen sind, oder andere Einflüsse eine relativ langsame Abschwächung oder Zunahme der Signalstärke bewirken. Die Signalstärke schwankt daher in der Regel in einem bestimmten Bereich. In diesen zuvor genannten Fällen soll ein Stoppen der Bewegung des Konstruktionselements unterbleiben, da kein Hindernis vorliegt. Daher wird bei einer relativ langsamen Änderungsgeschwindigkeit der Signalstärke ein Auslöseimpuls zum Stoppen der Bewegung des Konstruktionselements nicht ausgegeben.

Auch der Auslöseimpuls der zweiten Schwellenwertmesseinrichtung kann zu einem vollständigen Stoppen des Konstruktionselements führen, wobei eine Weiterfahrt nach dem oben beschriebenen Verfahren durch Bestätigung der Freigabe oder durch ein Freigabemodul erfolgen kann. Eine automatische Freigabe kann in diesem Fall nach Empfang der vorgegebenen Signalstärke und einer relativ schnellen Änderungsgeschwindigkeit der Signalstärke erfolgen.

Vorzugsweise weist die Auswerteeinheit eine Differentiationseinrichtung auf, die der zweiten Schwellenwertmesseinrichtung vorgeschaltet ist und die geeignet ist, eine Änderungsgeschwindigkeit der Signalstärke des an der Empfängereinheit empfangenen Signals in ein amplitudenförmiges Ausgangssignal umzuwandeln. Insbesondere weist die Differentiationseinrichtung eine Ausgangsleitung auf, die mit der zweiten Schwellenwertmesseinrichtung verbunden ist, so dass das Ausgangssignal von der Differentiationseinrichtung in die zweite Schwellenwertmesseinrichtung geleitet werden kann. Das amplitudenförmige Ausgangssignal spiegelt die Änderungsgeschwindigkeit der Signalstärke wieder und kann insbesondere verstärkt sein. Dadurch kann eine relativ genaue Messung der Änderungsgeschwindigkeit der Signalstärke in der zweiten Schwellenwertmesseinrichtung erfolgen.

Die erste Schwellenwertmesseinrichtung und die zweite Schwellenwertmesseinrichtung können derart in der Auswerteinheit verschaltet sein, dass zum Stoppen der Maschinenbewegung des Konstruktionselements ein Auslöseimpuls sowohl von der ersten Schwellenwertmesseinrichtung als auch von der zweiten Schwellenwertmesseinrichtung ausgeben sein muss. Insbesondere kann eine Und-Gatter-Einrichtung vorgesehen sein, mit der die erste Schwellenwertmesseinrichtung und die zweite Schwellenwertmesseinrichtung derart verschaltet sind, dass nur bei Vorliegen von Auslöseimpulsen beider Schwellenwertmesseinrichtungen ein Steuersignal zum Stoppen der Bewegung des Konstruktionselements ausgegeben wird. Liegt dagegen nur ein Auslöseimpuls von der ersten Schwellenwertmesseinrichtung oder von der zweiten Schwellenwertmesseinrichtung vor, wird beispielswiese an der Und-Gatter-Einrichtung ein Steuersignal zum Stoppen der Bewegung des Konstruktionselements nicht ausgegeben. Dadurch kann beispielsweise im Fall eines Auslöseimpulses der ersten Schwellenwertmesseinrichtung und einem Ausbleiben eines Auslöseimpulses der zweiten Schwellenwertmesseinrichtung, ein Steuersignal zum Stoppen der Bewegung des Konstruktionselements unterdrückt werden. Dies ist insbesondere dann erforderlich, wenn zwar eine Unterschreitung der Signalstärke in der ersten Schwellenwertmesseinrichtung erfasst ist, jedoch die Änderungsgeschwindigkeit der Signalstärke während des Abfallens der Signalstärke relativ gering ist, was auf eine optische Überlagerung oder Reflexion schließen lässt, nicht jedoch auf ein Hindernis im Gefahrenbereich. Fehlauslösungen können somit effektiv verhindert werden.

Die erste Schwellenwertmesseinrichtung und/oder die zweite Schwellenwertmesseinrichtung sind bevorzugt geeignet, ein eingehendes Analogsignal in ein ausgehendes Digitalsignal umzuwandeln. Dadurch kann anhand des ausgangsseitigen Digitalsignals in relativ einfacher Weise festgestellt werden, ob ein Auslöseimpuls, das heißt eine Unterschreitung bzw. eine Überschreitung eines Schwellenwerts, vorliegt oder nicht. Bei Vorliegen eines Auslöseimpulses wird ein digitales Signal gesendet, bei Ausbleiben des Auslöseimpulses wird kein digitales Signal gesendet. Dazu sind die erste Schwellenwertmesseinrichtung und/oder die zweite Schwellenwertmesseinrichtung besonders bevorzugt als ein Schmitt Trigger ausgebildet. Die Auswerteeinheit kann dadurch relativ einfach und kostengünstig aufgebaut sein.

Vorzugsweise sind die erste Schwellenwertmesseinrichtung und/oder die zweite Schwellenwertmesseinrichtung in einem Mikroprozessor integriert. Der Mikroprozessor kann die gesamte Steuerungseinrichtung der Überwachungsvorrichtung und/oder die Motorelektronik des Antriebs des Konstruktionselements umfassen. Dadurch kann eine zentrale Steuerung der Maschinenbewegung des Konstruktionselements erfolgen. Ferner kann die Steuerungseinrichtung kostengünstig in ein Gesamtsteuerungssystem integriert werden.

Vorzugsweise umfasst die Auswerteeinheit ein Zeitmodul, das geeignet ist, die zeitliche Dauer der Unterschreitung des Schwellenwertes der Signalstärke und/oder der Überschreitung des Schwellenwertes der Änderungsgeschwindigkeit zu erfassen, und das bei Überschreiten einer vorgegebenen Mindestdauer einen Auslöseimpuls ausgibt. Dadurch kann eine Fehlauslösung bei einer nicht durch ein Hindernis verursachten Signalabschwächung bzw. einem Signalausbleiben verhindert werden. Die Mindestdauer kann ebenfalls als Anteil eines Mittelwertes berechnet und/oder vorgegeben sein.

Die Steuerungseinrichtung und/oder die Auswerteeinheit können in der Erfassungseinrichtung, insbesondere in der Sendereinheit und/oder Empfängereinheit, integriert sein. Dadurch kann die Überwachungsvorrichtung relativ kompakt aufgebaut sein.

Die Erfassungseinrichtung und/oder die Steuerungseinrichtung können an einem Tor oder einer Tür angeordnet sein, insbesondere an einer Schließkante eines Tors oder einer Tür. Dadurch kann die Erfassungseinrichtung als eine dem Tor vorauseilende Lichtschranke ausgebildet sein. Dazu kann die Sendereinheit an einer ersten Seite des Tors und die Empfängereinheit an einer der ersten Seite gegenüberliegenden zweiten Seite des Tors angeordnet sein. Alternativ sind die Sendereinheit und die Empfängereinheit an der gleichen Seite des Tors angeordnet und insbesondere als eine Reflex-Lichtschranke mit einem gegenüberliegenden Reflektor ausgebildet, In einer alternativen Ausgestaltung ist die Erfassungseinrichtung ortsfest, beispielsweise an einem Rahmen des Tors, angeordnet. Grundsätzlich ist unter einem Tor jede beliebige Art eines Tors zu verstehen, insbesondere ein Sektionaltor, Folientor, Schiebetor oder Rolltor.

Vorzugsweise ist die Erfassungseinrichtung als eine Lichtschranke, ein Lichtgitter oder ein Lichtvorhang ausgebildet. Dadurch kann ein besonders breitflächiger Erfassungsbereich und somit ein besonders wirkungsvoller Schutz gegen eine Kollision mit einem Hindernis geschaffen werden.

Zum Aufspannen eines solchen Lichtgitters oder Lichtvorhangs kann die Erfassungseinrichtung zumindest zwei separate Sendereinheiten und/oder zumindest zwei separate Empfängereinheiten umfassen. Dadurch kann in einem Lichtgitter oder -vorhang jeder einzelne den Gefahrenbereich durchquerende Signalstrahl jeweils von einer Sendereinheit gesendet und von einer Empfängereinheit empfangen werden. Hierbei ist bevorzugt jeder Sendereinheit jeweils eine Empfängereinheit zugeordnet. Dadurch kann in relativ einfacher Weise ermittelt werden, in welchem Teil des Gefahrenbereichs sich ein erfasstes Hindernis befindet. Folglich kann ein Stoppen der Maschinenbewegung zeitlich verzögert werden, wenn beispielsweise ein Anprall an das Hindernis aufgrund dessen Lage im Gefahrenbereich erst nach einem gewissen Fortfahren der Maschinenbewegung zu erwarten ist. In einer Ausgestaltung der Erfindung kann auch lediglich eine Sendereinheit und mehrere Empfängereinheiten oder auch mehrere Sendereinheiten und nur eine Empfängereinheit vorgesehen sein, wobei die optischen Signale zum Aufspannen eines Lichtgitters oder Lichtvorhangs durch Hilfsmittel, wie Reflektoren, umlenkbar sind. Das Erfassungssystem kann grundsätzlich in der Ebene des Fahrwegs des Rolltors angeordnet sein. Alternativ ist es möglich, dass das Erfassungssystem seitlich beabstandet von dieser Ebene angeordnet ist, so dass das Rolltor die Signalstrahlen nicht kreuzt.

Besonders bevorzugt sind die zumindest zwei separaten Sendereinheiten und/oder die zumindest zwei separaten Empfängereinheiten über einen gemeinsamen Schalter zeitgleich aktivierbar. Insbesondere können die Sendereinheiten über einen ersten Schalter und die Empfängereinheiten über einen zweiten Schalter jeweils zeitgleich aktivierbar sein. Alternativ können die Sendereinheiten und die Empfängereinheiten gemeinsam über einen Schalter zeitgleich aktivierbar sein. Dadurch kann ein zeitgleiches Senden und/oder Empfangen der einzelnen Signale erfolgen, so dass der Gefahrenbereich von jedem Signalstrahl nicht nacheinander, sondern zeitgleich durchquert wird. Dadurch ist eine relativ schnelle und sichere Erfassung eines Hindernisses im Gefahrenbereich ermöglicht. Ferner ist eine aufwendige Taktung oder Modulation der einzelnen Signalstrahlen nicht erforderlich, so dass die Erfassungseinrichtung relativ kostengünstig in der Herstellung und Montage ist.

Vorzugsweise ist senderseitig eine Signalverteilereinrichtung vorgesehen, die das von der Sendereinheit ausgesendete Signal, auch Gesamt-Signal genannt, in zumindest zwei separate Signalteilstrahlen unterteilt. Hierbei kann die Teilung des Gesamt-Signals ungleichmäßig erfolgen, so dass ein erster Signalteilstrahl eine größere Signalintensität und/oder Signalstärke aufweist als ein zweiter Signalteilstrahl. Dies ist insbesondere bei einer solchen Signalverteilereinrichtung vorteilhaft, bei der mehr als eine Teilung des Signalstrahls erfolgt, so dass eine nachgelagerte Teilung berücksichtigt wird und letztlich die den Gefahrenbereich durchquerenden Signalteilstrahlen jeweils eine im Wesentlichen gleiche Signalintensität und/oder Signalstärke aufweisen. Somit ist zur Erzeugung eines Lichtgitters bzw. -vorhangs lediglich eine Sendereinheit erforderlich, wodurch die Erfassungseinrichtung relativ kostengünstig ist.

Zur Bündelung der einzelnen, den Gefahrenbereich durchquerenden Signalteilstrahlen kann empfängerseitig eine Signalbündeleinrichtung vorgesehen sein, durch die zumindest zwei separate Signalteilstrahlen in ein gemeinsames Signal gebündelt werden. Das zu einem einzigen Signal gebündelte und in Richtung der Empfängereinheit weitergeleitete Gesamt-Signal bildet somit eine Summe aus zumindest zwei Signalteilstrahlen, insbesondere eine Summe aus der Signalintensität und/oder Signalstärke von den zumindest zwei Signalteilstrahlen. Dadurch ist zum Empfangen eines Lichtgitters bzw. -vorhangs lediglich eine Empfängereinheit erforderlich, so dass eine relativ kostengünstige Erfassungseinrichtung geschaffen ist.

Die Signalverteilereinrichtung und/oder die Signalbündeleinrichtung können eine Anordnung von zumindest einer Reflexionsfläche sein, wie zum Beispiel einem Spiegel oder Reflektor. Die Reflexionsfläche kann hierbei semidurchlässig sein. Dadurch kann senderseitig ein erster Signalteilstrahl durch eine erste Reflexionsfläche in Richtung des Gefahrenbereichs umgelenkt werden und ein zweiter Signalteilstrahl durch die erste Reflexionsfläche im Wesentlichen gradlinig hindurchtreten. Dieser durch die erste Reflexionsfläche hindurchgetretene zweite Signalteilstrahl kann an einer weiteren nachgelagerten senderseitigen zweiten Reflexionsfläche in Richtung des Gefahrenbereichs umgelenkt oder wiederum im Wesentlichen gradlinig hindurchtreten und an einer nachgelagerten dritten Reflexionsfläche in weitere Signalteilstrahlen geteilt werden. Dadurch ist ein Aufspannen eines Lichtgitters oder Lichtvorhangs in relativ einfacher Weise ermöglicht. Empfängerseitig kann ein umgekehrter Prozess ablaufen, indem ein aus Richtung des Gefahrenbereichs kommender erster Signalteilstrahl durch eine undurchlässige erste Reflexionsfläche vollständig in Richtung der Empfängereinheit umgelenkt wird. An einer zwischen der ersten Reflexionsfläche und der Empfängereinheit angeordneten semidurchlässigen zweiten Reflexionsfläche kann der erste Signalteilstrahl in Richtung der Empfängereinheit im Wesentlichen gradlinig hindurchtreten, wahrend ein von dem Gefahrenbereich kommender zweiter Signalteilstrahl an der zweiten Reflexionsfläche in Richtung der Empfängereinheit umgelenkt werden kann und den ersten Signalteilstrahl überlagern kann. Hierbei wird die Signalintensität und Signalstärke des zweiten Signalteilstrahls bevorzugt zu der des ersten Signalteilstrahls hinzuaddiert wird. An einer weiteren, nachgelagerten empfängerseitigen dritten Reflexionsfläche kann ein weiterer Signalteilstrahl umgelenkt und zu dem empfängerseitigen Signal hinzukommen. Das empfängerseitige gebündelte Gesamtsignal ist somit durch die Summe der Signalintensität und/oder Signalstärke von den vom Gefahrenbereich stammenden Signalteilstrahlen gebildet. Dadurch ist ein Empfangen der Signalteilstrahlen eines Lichtgitters oder Lichtvorhangs in relativ einfacher Weise ermöglicht.

Die Sendereinheit und/oder die Empfängereinheit können innerhalb einer Führungsschiene des beweglichen Konstruktionselements angeordnet sein. Insbesondere können die Sendereinheit und/oder die Empfängereinheit in einer Führungs- oder Leitschiene angeordnet sein, in der das Konstruktionselement bewegbar gelagert bzw. geführt ist, Beispielsweise ist die Erfassungseinrichtung an dem Rolltor befestigt und innerhalb eines seitlich an dem Rolltor angeordneten feststehenden Rahmens angeordnet bzw. von dem Rahmen zumindest teilweise umgeben. Dadurch kann ein sich über die gesamte Breite des Konstruktionselementes erstreckender Bereich überwacht werden. Dies eignet sich besonders für Durchgänge oder Durchfahrten.

Erfindungsgemäß sind in einem Verfahren zum Überwachen einer Maschinenbewegung eines beweglichen Konstruktionselements, insbesondere eines Tors oder einer Tür, die folgenden Schritte vorgesehen: Senden eines optischen Signals von einer Sendereinheit zu einer Empfängereinheit, Empfangen des Signals an einer Empfängereinheit, Auswerten einer Signalstärke des an der Empfängereinheit empfangenen Signals in einer ersten Schwellenwertmesseinrichtung und bei Detektieren einer Unterschreitung eines vorgegebenen Schwellenwertes der Signalstärke erfolgt ein Ausgeben eines Auslöseimpulses zum Stoppen der Maschinenbewegung an die Steuerungseinrichtung, Auswerten der Signalstärke in einer zweiten Schwellenwertmesseinrichtung und bei Detektieren einer Überschreitung eines vorgegebenen Schwellenwertes der Änderungsgeschwindigkeit der Signalstärke erfolgt ein Ausgeben eines Auslöseimpulses zum Stoppen der Maschinenbewegung an die Steuerungseinrichtung, und Verknüpfen der von der ersten Schwellenwertmesseinrichtung und der zweiten Schwellenwertmesseinrichtung ausgegebenen Auslöseimpulse in einer Und-Gatter-Einrichtung, und bei Vorliegen eines Auslöseimpulses von sowohl der ersten Schwellenwertmesseinrichtung als auch der zweiten Schwellenwertmesseinrichtung erfolgt ein Ausgeben eines Auslösesignals zum Stoppen der Maschinenbewegung des Konstruktionselements an eine Motorelektronik eines Antriebs des Konstruktionselements, Dadurch kann eine besonders sichere und effiziente Überwachung der Maschinenbewegung erfolgen.

Bei dem Auswerten des an der Empfängereinheit empfangenen Signals kann die Dauer der Unterschreitung des Schwellenwertes der Signalstärke und/oder die Dauer der Überschreitung des Schwellenwertes der Änderungsgeschwindigkeit erfasst werden, wobei bei einem Detektieren einer Überschreitung einer vorgegebenen Mindestdauer ein Ausgeben eines Auslöseimpuls erfolgt. Die Mindestdauer kann berechnet und/oder vorgegeben sein.

Vorzugsweise wird der Schwellenwert der Signalstärke und/oder der Schwellenwert der Änderungsgeschwindigkeit als ein Anteil eines Mittelwertes berechnet. Dadurch kann der jeweilige Schwellenwert in relativ einfacher Weise zur Verfügung gestellt werden und hinsichtlich weiterer Randbedingungen, wie einer Bewegungsgeschwindigkeit des Konstruktionselements, individualisiert bzw. angepasst werden.

Nach dem Senden des Signals erfolgt bevorzugt eine Verteilung bzw. Auffächerung des Signals in zumindest zwei separate Signalteilstrahlen. Dadurch ist zur Erzeugung eines Lichtgitters oder Lichtvorhangs lediglich eine Sendereinheit erforderlich, so dass die Erfassungseinrichtung relativ einfach aufgebaut und dadurch kostengünstig ist.

Vor dem Empfangen des Signals erfolgt bevorzugt eine Bündelung von zumindest zwei separaten Signalteilstrahlen zu einem Gesamt-Signal. Dadurch ist ein Empfangen der Signalteilstrahlen eines Lichtgitters oder Lichtvorhangs in relativ einfacher und kostengünstiger Weise ermöglicht. Zudem ist lediglich eine Empfängereinheit erforderlich.

Bei dem Auswerten des an der Empfängereinheit empfangenen Signals wird bevorzugt eine Überlagerung und/oder Reflexion benachbarter Signalteilstrahlen berücksichtigt. Insbesondere wird bei der Auswertung der Signalstärke des an der Empfängereinheit empfangenen Signals in einer ersten Schwellenwertmesseinrichtung eine Überlagerung und/oder Reflexion benachbarter Signalteilstrahlen berücksichtigt. Sobald ein Objekt in den Gefahrenbereich auftritt erfolgt eine Abschwächung eines der Signalteilstrahlen, was eine Abschwächung der Summe der an der Empfängereinheit empfangenen Signalstärke bewirkt, welches erfasst werden kann und ein Stopp der Maschinenbewegung auslösen kann. Dadurch kann eine besonders sichere und effiziente Überwachung der Maschinenbewegung erfolgen.

Nachfolgend wird die Erfindung anhand eines Beispiels unter Bezugnahme auf die anliegenden Zeichnungen näher erläutert.
Figur 1a zeigt schematisch ein Rolltor mit einer ersten erfindungsgemäßen Ausführung der Überwachungsvorrichtung,
Figur 1b zeigt schematisch ein Rolltor mit einer zweiten erfindungsgemäßen Ausführung der Überwachungsvorrichtung,
Figur 2 zeigt schematisch die Verschaltung einer Steuerungseinrichtung einer erfindungsgemäßen Überwachungsvorrichtung,
Figur 3a zeigt schematisch die Signalverläufe einer erfindungsgemäßen Überwachungsvorrichtung bei Vorliegen eines Hindernisses,
Figur 3b zeigt schematisch die Signalverläufe einer erfindungsgemäßen Überwachungsvorrichtung bei Auftreten von Vibrationen.

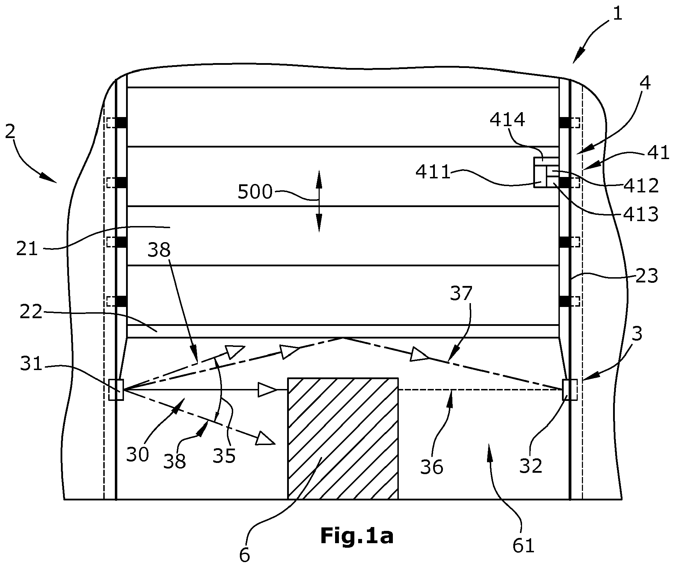

In der Figur 1a ist eine übliche Anwendung der Vorrichtung 1 zur Überwachung einer Bewegung 500 eines beweglichen Konstruktionselements 2 gezeigt. Vorliegend dient die Vorrichtung 1 als Überwachungs- und Schutzeinrichtung eines automatisch betriebenen Rolltors 21 und weist eine Erfassungseinrichtung 3 sowie eine Steuerungseinrichtung 4 auf. Das Rolltor 21 dient zum Öffnen und Schließen einer Durchfahrt 61 und ist motorisch angetrieben auf und ab bewegbar. Das Rolltor 21 besteht aus mehreren miteinander verbundenen Torsegmenten, die seitlich in einer Führungsschiene 23 bewegbar gelagert sind. An einer Unterseite des Rolltors 21 ist eine Schließkante 22 angeordnet, mit der das Rolltor 21 im verschlossenen Zustand an einem Boden der Durchfahrt 61 zum Anliegen kommt. Die Schließkante 22 ist üblicherweise aus Edelstahl, Aluminium oder Stahl hergestellt und kann somit eine reflektierende Oberfläche aufweisen.

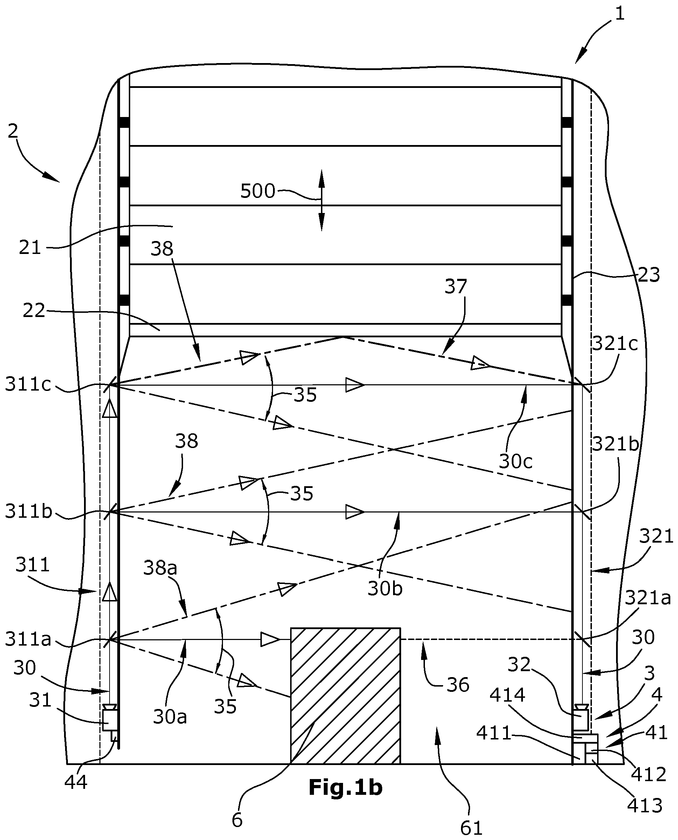

Die Erfassungseinrichtung 3 ist unterhalb der Schließkante 22 des Rolltors 21 angeordnet und umfasst insbesondere eine Sendereinheit 31 zum Senden eines optischen Signals 30 und eine Empfängereinheit 32 zum Empfangen des optischen Signals 30. Zur Ausbildung eines definierten Abstands zwischen der Erfassungseinrichtung 3 und der Schließkante 22 sind die Sendereinheit 31 und die Empfängereinheit 32 an einem der Schließkante 22 nach unten hin hervorstehendem Steg oder einem Blech befestigt. Dadurch bildet die Erfassungseinrichtung 3 ein dem Rolltor 21 beim Schließen bzw. Herabbewegen 500 voreilendes Erfassungssystem, wobei der Abstand zwischen der Erfassungseinrichtung 3 und der Schließkante 22 entsprechend einer erforderlichen Verzögerungszeit für ein kollisionsfreies Stoppen des Rolltors nach Erfassen eines Hindernisses ausgelegt ist. Die Sendereinheit 31 und die Empfängereinheit 32 sind jeweils an einem äußersten seitlichen Ende des Rolltors 21 befestigt und von der Führungsschiene 23 des Rolltors 21 zumindest teilweise umgeben, so dass die gesamte Breite der Durchfahrt 61 von der Erfassungseinrichtung 3 überwacht werden kann. Um bei einem vollständigen Schließen des Tors 21 ein Anschlagen der Erfassungseinrichtung 3 am Boden der Durchfahrt 61 zu vermeiden, ist in dem Boden, im Bereich der Torführung 23, eine in der Figur 1 nicht dargestellte Ausnehmung zum Versenken bzw. zur Aufnahme der Erfassungseinrichtung 3 vorgesehen. In einer anderen, nicht gezeigten Ausführung der Erfindung kann die Erfassungseinrichtung 3 ortsfest an dem feststehenden Rahmen 23 angeordnet sein, wobei die Erfassungseinrichtung 3 hierbei bevorzugt geeignet ist, einen sogenannten Lichtvorhang über annähernd die gesamte Breite und Höhe der Durchfahrt 61 zu bilden. Bei einer solchen ortsfesten Erfassungseinrichtung 3 kann es aufgrund der Relativbewegung der Tors 21 in Bezug auf die Erfassungseinrichtung 3 vermehrt zu Reflexionen und somit zu einer schwankenden Signalstärke 33 kommen.

Vorliegend ist die Erfassungseinrichtung 3 als eine Lichtschranke ausgebildet, wobei ein Lichtstrahl 30 von einer Photo-Sendereinheit 31 ausgegeben und von einer Photo-Empfängereinheit 32 empfangenen wird. Bauartbedingt weist das von der Sendereinheit 31 in Richtung der Empfängereinheit 32 gesendete optische Signal 30 einen Abstrahl- bzw. Streuwinkel 35 auf. Es sollte deutlich sein, dass der Streuwinkel 35 nicht nur auf die in der Figur 1 gezeigte Ebene beschränkt ist, sondern rotationssymmetrisch ist, so dass ein von der Sendereinheit ausgehender Lichtkegel aufgespannt wird. Die an dem Lichtkegel außen liegenden optischen Signale bzw. Lichtstrahlen sind mit 38 gekennzeichnet. Die Signale 38 streuen vorliegend derart weit, dass diese von der Empfängereinheit 32 - zumindest in einer direkten Verbindungslinie - nicht mehr erfasst werden können. Die Empfängereinheit 32 kann zum Empfangen des Signals 30 ebenfalls einen Streuwinkel 35, wie oben beschrieben, aufweisen. Im Idealfall - wie in Figur 1 gezeigt - sind die Sendereinheit 31 und die Empfängereinheit 32 derart zueinander ausgerichtet, dass ein direkter Lichtstrahl 36, der Hauptstrahl, bei beiden Einheiten 31, 32 jeweils in der Winkelhalbierenden des Streuwinkels 35 liegt. Der direkte Lichtstrahl 36 verläuft somit in der kürzesten Verbindungsstrecke zwischen der Sendereinheit 31 und Empfängereinheit 32. In diesem Fall sind die Sendereinheit 31 und die Empfängereinheit 32 exakt mittig zueinander ausgerichtet.

Neben dem direkten Lichtstrahl 36, der vorliegend in der Figur 1 durch ein Hindernis 6 unterbrochen ist, und den einen Lichtkegel begrenzenden Lichtstrahlen 38 umfasst das optische Signal 30 auch reflektierte Lichtstrahlen 37. Der Lichtstrahl 37 wird in einem bestimmten Winkel zu dem direkten Lichtstrahl 36 von der Sendereinheit 31 gesendet und trifft etwa in der Mitte der Durchfahrt bzw. des Rolltors 21 auf die Schließkante 22. An dieser Stelle wird der Lichtstrahl 37 an der Schließkante 22 reflektiert und in einem Ausfallwinkel, der annähernd dem Einfallwinkel entspricht, in Richtung der Empfängereinheit 32 abgestrahlt. Aufgrund des Streuwinkels 35 der Empfängereinheit 32 kann auch der reflektierte Lichtstrahl 37 an der Empfängereinheit 32 empfangen werden.

Wie in der Figur 1a gezeigt, ist es durch die Reflektion des Lichtstrahls 37 möglich, dass ein Hindernis 6, dass sich In dem Bewegungsbereich bzw. Gefahrenbereich des Rolltors 21 befindet, von dem optischen Signal 30 umgangen und dadurch nicht erfasst wird. Somit wird an der Empfängereinheit 32 - trotz des Hindernisses 6 und der Unterbrechung des direkten Lichtstrahls 36 - ein Teilsignal 37 empfangen. Bei konventionellen Überwachungseinrichtungen würde dies nicht zu einem Stoppen der Maschinenbewegung 500 führen, da ein Teil des von der Sendereinheit 31 gesendeten Signals 37 weiterhin empfangen wird und somit ein Generieren eines Auslöseimpulses zum Stoppen ausbleiben würde. Die Folge hiervon wäre ein Anprall des Rolltors 21 an dem Hindernis 6. Um dies zu vermeiden, ist vorliegend eine Steuerungseinrichtung 4 mit einer Auswerteeinheit 41 vorgesehen.

Die Steuerungseinrichtung 4 ist vorliegend an dem Rolltor 21 befestigt, kann jedoch in einer alternativen Ausgestaltung auch ortsfest angeordnet sein. Die Steuerungseinrichtung 4 umfasst eine Auswerteeinheit 41. Die Auswerteeinheit 41 dient der Auswertung einer Signalstärke 33 des an der Empfängereinheit 32 empfangenen Signals 30. Die Auswerteeinheit 41 umfasst eine erste Schwellenwertmesseinrichtung 411, eine Differentiationseinrichtung 413, eine zweite Schwellenwertmesseinrichtung 412 und eine Und-Gatter-Einrichtung 414.

In der Figur 1b ist eine zweite Ausführung der Vorrichtung 1 zur Überwachung einer Bewegung 500 eines beweglichen Konstruktionselements 2 gezeigt. Die in Figur 1b gezeigte Vorrichtung 1 entspricht im Wesentlichen der in Figur 1a gezeigten Vorrichtung 1, wobei vorliegend die Erfassungseinrichtung 3 zur Erzeugung eines Lichtgitters aufgebaut ist. Dazu weist die Erfassungseinrichtung 3 neben einer Sendereinheit 31 zum Senden eines optischen Signals 30 und einer Empfängereinheit 32 zum Empfangen des optischen Signals 30 zusätzlich eine Signalverteilereinrichtung 311 und eine Signalbündeleinrichtung 321 auf.

Die Erfassungseinrichtung 3 dient wiederum der Überwachung eines Gefahrenbereichs unterhalb eines Rolltors 21, insbesondere bei dessen Herabbewegen 500. Die Sendereinheit 31 und die Empfängereinheit 32 sind wiederum jeweils an einem gegenüberliegenden Rand des Gefahrenbereichs, vorliegend eine Tordurchfahrt 61, angeordnet, insbesondere an dem Rahmen 23 des Rolltors 21. Dadurch ist die Erfassungseinrichtung 3 vorliegend mit dem Rolltor 21 nicht mit bewegbar. Es ist jedoch durchaus möglich, dass die in Figur 1b gezeigte Erfassungseinrichtung 3 auch an einer Unterseite 22 des Rolltors 21 angeordnet ist, was vorliegend aber nicht gezeigt ist.

Durch die Erfassungseinrichtung 3 wird ein Lichtgitter in die Tordurchfahrt 61 aufgespannt, wobei das Lichtgitter mehrere, in einem definierten Abstand zueinander, horizontal angeordnete Signal- bzw. Lichtteilstrahlen 30a, 30b, 30c aufweist. Die drei Signalteilstrahlen 30a, 30b, 30c durchqueren den Gefahrenbereich unterhalb des Rolltors 21. Dadurch bildet die Erfassungseinrichtung 3 ein dem Rolltor 21 beim Schließen bzw. Herabbewegen 500 voreilendes Erfassungssystem, das ein besonders frühzeitiges Erkennen eines Hindernisses 6 ermöglicht. Dadurch kann beispielsweise bei Vorliegen eines Hindernisses 6, das sich zwar in dem Fahrweg des Rolltors 21, jedoch in einem ausreichendem Abstand zu der Unterkante 22 des Rolltors 21 befindet, ein Stoppen des Herabbewegens 500 des Rolltors 21 zeitlich verzögert werden. Dadurch können im Falle eines raschen Wiederentfernens des Hindernisses 6 unnötige Stopps des Tors 21 vermieden werden.

Zum Aufspannen des Lichtgitters ist eine Signalverteilereinrichtung 311 vorgesehen, die zwei semidurchlässige Spiegel 311a, 311b und einen undurchlässigen Spiegel 311c umfasst. Dadurch kann das von der Sendereinheit 31 gesendete Signal 30 in die drei Signalteilstrahlen 30a, 30b, 30c unterteilt werden. Die Spiegel 311a, 311b, 311c sind dabei derart durchlässig, dass jeder Signalteilstrahl 30a, 30b, 30c im Wesentlichen die gleiche Signalstärke aufweist. Bauartbedingt weisen die von der Signalverteilereinrichtung 311 bzw. von den Spiegeln 311a, 311b, 311c in Richtung des Gefahrenbereichs umgelenkten Signalteilstrahlen 30a, 30b, 30c jeweils einen Abstrahl- bzw. Streuwinkel 35 auf. Der Streuwinkel 35 ist rotationssymmetrisch, so dass jeweils ein von den Spiegeln 311a, 311b, 311c ausgehender Lichtkegel aufgespannt wird. Die an dem Lichtkegel außen liegenden optischen Signale bzw. Lichtstrahlen sind mit 38 bzw. 38a gekennzeichnet. Der Signalteilstrahl 30a streut vorliegend mit dem Lichtkegel 38a derart weit, dass der Lichtkegel des Signalteilstrahls 30a empfängerseitig teilweise bis zu einem benachbarten Spiegel 321b der Signalbündeleinrichtung 322 reicht.

Empfängerseitig werden die drei Signalteilstrahlen 30a, 30b, 30c mittels der Signalbündeleinrichtung 322, die einen undurchlässigen Spiegel 321c und zwei semidurchlässige Spiegel 321a, 321b umfasst, zu einem einzigen Gesamtsignalstrahl 30 gebündelt und in Richtung der Empfängereinheit 32 geleitet. Das empfängerseitige gebündelte Signal 30 umfasst dabei eine Signalstärke, die der Summe der Signalstärke der einzelnen Signalteilstrahlen 30a, 30b, 30c entspricht. Sobald eines der Signalteilstrahlen 30a, 30b, 30c unterbrochen ist, wie vorliegend der Signalteilstrahl 30a durch das Hindernis 6, verringert sich die Signalstärke des empfängerseitigen Gesamtsignals 30, was In der Auswerteeinheit 41 erfasst und in der Steuerungseinrichtung 4 weiter verarbeitet wird.

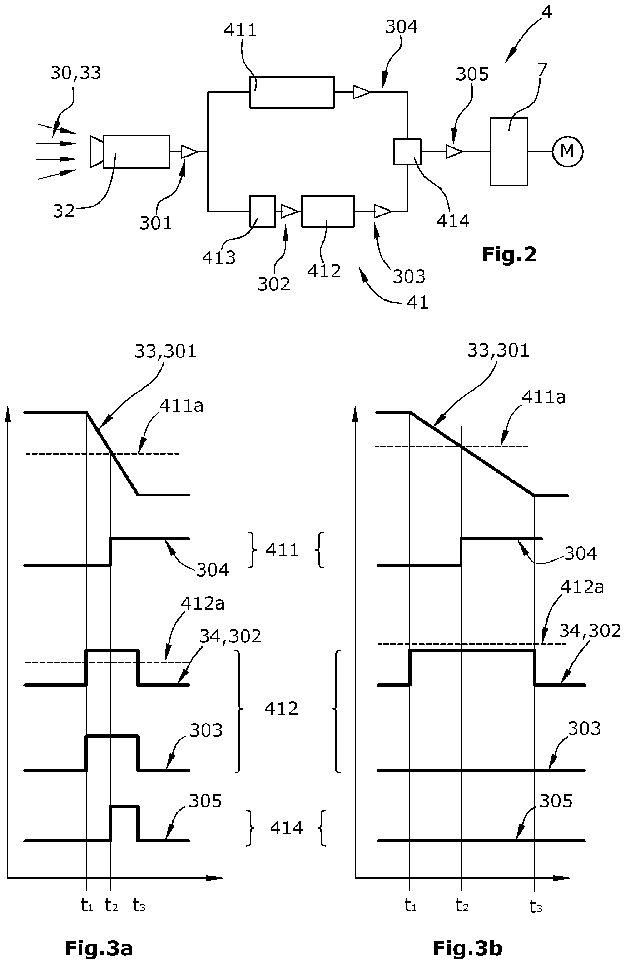

Zum besseren Verständnis der Vorgänge in der Steuerungseinrichtung 4 sind in der Figur 2 schematisch die Verschaltung der erfindungsgemäßen Auswerteeinheit 41 dargestellt.

An der Empfängereinheit 32 wird das von der Sendereinheit 31 gesendete Signal 30 zumindest teilweise empfangen. Die Empfängereinheit 32 empfängt das optische Signal 30 kontinuierlich, wobei an einem Ausgang der Empfängereinheit 32 ein Analogsignal 301 bereitgestellt wird, das die Signalstärke 33 des empfangenen Signals 30 über die Zeit wiedergibt. Mittels der Signalstärke 33 des Signals 30 kann in der Auswerteeinheit 41 eine durch die Bewegung 500 des Rolltors 21 hervorgerufene Gefahrensituation eingeschätzt werden, insbesondere ein Hindernis 6 erkannt werden. Dazu wird das Ausgangssignal 301 der Empfängereinheit 32 sowohl in eine erste Schwellenwertmesseinrichtung 411 als auch in eine Differentiationseinrichtung 413 der Auswerteeinheit 41 geleitet.

Die erste Schwellenwertmesseinrichtung 411 ist geeignet, die Signalstärke 33 des an der Empfängereinheit 32 empfangenen Signals 30 zu erfassen, und gibt bei Detektieren einer Unterschreitung einer vorgegebenen Signalstärke 33 einen Auslöseimpuls 304 zum Stoppen der Bewegung 500 des Rolltors 21 an die Und-Gatter-Einrichtung 414 aus. Eine solche Unterschreitung ist beispielsweise dann der Fall, wenn der direkte Lichtstrahl 36 unterbrochen ist. In der ersten Schwellenwertmesseinrichtung 411 wird das Analogsignal 301 in ein Digitalsignal 304 umgewandelt. Bei Vorliegen eines Analogsignals 301 unterhalb des Schwellenwertes 411a wird ein Auslöseimpuls 304 von der ersten Schwellenwertmesseinrichtung 411 ausgegeben. Anderenfalls liegt kein Ausgangsimpuls 304 an.

Die Differentiationseinrichtung 413 ist der zweiten Schwellenwertmesseinrichtung 412 vorgeschaltet. In der Differentiationseinrichtung 413 wird das Analogsignal 301 gefiltert und verstärkt, in dem die Änderungsgeschwindigkeit 34 der Signalstärke 33 in ein amplitudenförmiges Analogsignal 302 umgewandelt wird. Das amplitudenförmige Signal 302 wird zu der zweiten Schwellenwertmesseinrichtung 412 geleitet, in der das Analogsignal 302 in ein Digitalsignal umgewandelt wird.

Die zweite Schwellenwertmesseinrichtung 412 ist geeignet, die Änderungsgeschwindigkeit 34 der Signalstärke 33 des an der Empfängereinheit 32 empfangenen Signals 30 zu erfassen, und gibt bei Detektieren einer Überschreitung eines vorgegebenen Schwellenwert 412a der Änderungsgeschwindigkeit 34 der Signalstärke 33 einen Auslöseimpuls 303 zum Stoppen der Bewegung 500 des Rolltors 21 an die Und-Gatter-Einrichtung 414 aus. Insbesondere wird bei Vorliegen eines Analogsignals 302 oberhalb des Schwellenwertes 412a ein Auslöseimpuls 303 ausgegeben. Dies kann beispielsweise dann der Fall sein, wenn eine sprunghafte Änderung durch ein in den direkten Lichtstrahl 36 eintreffendes Hindernis 6 vorliegt. Bei Vorliegen eines Analogsignals 302 unterhalb der Signalstärke 412a wird dagegen kein Auslöseimpuls 303 ausgegeben. Hierbei wird von einer optischen Überlagerung bzw. Reflexion ausgegangen.

Das von der ersten Schwellenwertmesseinrichtung 411 ausgegebene Auslösesignal 304 und das von der zweiten Schwellenwertmesseinrichtung 412 ausgegeben Auslösesignal 303 werden zu einer Und-Gatter-Einrichtung 414 geleitet, in der eine logische Verknüpfung dahingehend erfolgt, dass ein digitales Ausgangssignal 305 zum Stoppen der Bewegung 500 des Rolltors 21 nur dann von der Und-Gatter-Einrichtung 414 abgesetzt wird, wenn sowohl ein Auslösesignal 303 der ersten Schwellenwertmesseinrichtung 411 als auch Auslösesignal 304 der zweiten Schwellenwertmesseinrichtung 412 vorliegen. Das in der Und-Gatter-Einrichtung 414 generierte Steuersignal 305 wird von der Steuerungseinrichtung 4 an eine Motorelektronik 7 geleitet und bewirkt dort einen sofortigen Stopp eines Antriebsmotors M des Rolltors 21. Dazu ist die Und-Gatter-Einrichtung 414 über eine Verbindung mit der Motorelektronik 7 eines Antriebsmotors M des Rolltors 21 verbunden.

In der Figur 3a sind schematisch die erfindungsgemäßen Signalverläufe über die Zeit t bei einer Überwachung einer Bewegung 500 eines Rolltors 21 bei Vorliegen eines Hindernisses 6 gezeigt. Die Phase des Eintritts des Hindernisses 6 in den Lichtkegel 35 ist mit t1 gekennzeichnet. Das Hindernis 6 bewirkt eine rasche Abschwächung des an der Empfängereinheit 32 empfangenen optischen Signals 30 und somit eine rasche Abschwächung des analogen Ausgangssignal 301 der Empfängereinheit 32. Das Ausgangssignal 301 fällt ab und unterschreitet bei t2 einen vorgegebenen Schwellenwert 411a der Signalstärke 33 und verbleibt unterhalb dieses Schwellenwerts 411a bei einem Restwert. Dieser - vorliegend konstante - Restwert der Signalstärke 33 spiegelt das Empfangen eines reflektierenden Signalteils 37 wieder. Die Signalstärke 33 fällt daher nicht auf einen Wert ,Null' ab, sondern weist lediglich einen deutlich geringen Wert als zuvor auf.

In der ersten Schwellenwertmesseinrichtung 411 wird das Unterschreiten des vorgegebenen Schwellenwerts 411a der Signalstärke 33 bei t2 erfasst und ein entsprechendes digitales Auslöseimpuls 304 generiert, was In der Figur 3a mit der zweiten Kurve von oben dargestellt ist.

In der zweiten Schwellenwertmesseinrichtung 412 wird das amplitudenförmige Ausgangssignal 302 der Differentiationseinrichtung 413 ausgewertet, was in der Figur 3a mit der dritten Kurve von oben dargestellt ist. Das Ausgangssignal 302 ist relativ groß, da die Änderungsgeschwindigkeit 34 der Signalstärke 33 aufgrund des in den Lichtstrahl 36 eintretenden Hindernisses 6 relativ hoch ist. Es wird dementsprechend ein Überschreiten eines vorgegebenen Schwellenwerts 412a der Änderungsgeschwindigkeit 34 im Bereich zwischen t1 und t3 detektiert. Dementsprechend wird an der zweiten Schwellenwertmesseinrichtung 412 ein digitaler Auslöseimpuls 303 zwischen t1 und t3 generiert, was in der Figur 3a mit der vierten Kurve von oben dargestellt ist.

Die Auslöseimpulse 303, 304 laufen in der Und-Gatter-Einrichtung 414 zusammen, in der für den zeitlichen Bereich, in dem sowohl ein Auslöseimpuls 303 als auch ein Auslöseimpuls 304 vorliegen, vorliegend der Bereich t2 bis t3, ein Ausgangssignal 305 zum Ansteuern einer Motorelektronik 7 generiert wird, was entsprechend zum Stoppen des Antriebsmotors des Rolltors 21 führt. Das Ausgangssignal 305 ist in der Figur 3a mit der fünften Kurve von oben dargestellt ist.

In der Figur 3b sind schematisch die erfindungsgemäßen Signalverläufe über die Zeit t bei einer Überwachung einer Bewegung 500 eines Rolltors 21 bei Auftreten von allmählich eintretenden optischen Veränderungen zum Beispiel aufgrund von Schwingungen des Rolltors 21 dargestellt. Dabei wird ein Ausgangssignal 301 der Empfängereinheit 32 durch eine optische Veränderung, insbesondere durch eine Ablenkung oder Reflexion eines Teils des Signals 30, abgeschwächt. Die Phase des Eintritts der Schwingungen bzw. der Reflexion des optischen Signals 30 ist mit t1 gekennzeichnet. Das analoge Ausgangssignal 301 fällt sodann langsam ab, unterschreitet bei t2 eines vorgegebenen Schwellenwertes 411a der Signalstärke 33 und verbleibt unterhalb dieser Signalstärke 411a. Die verbleibende Signalstärke 33 erfolgt insbesondere aufgrund der an dem Lichtkegel außen angeordneten und an der Empfängereinheit 32 noch empfangbaren Signale 37, 38.

In der ersten Schwellenwertmesseinrichtung 411 wird das Unterschreiten des vorgegebenen Schwellenwertes 411a erfasst und ein entsprechendes digitaler Auslöseimpuls 304 generiert, was in der Figur 3b mit der zweiten Kurve von oben dargestellt ist.

In der zweiten Schwellenwertmesseinrichtung 412 wird das amplitudenförmige Ausgangssignal 302 der Differentiationseinrichtung 413 ausgewertet und ein Überschreiten eines vorgegebenen Schwellenwertes 412a der Änderungsgeschwindigkeit 34 nicht detektiert. Denn die Signalstärke-Änderungsgeschwindigkeit 34 ist bei den auftretenden Schwingungen relativ gering. Dies ist in der Figur 3b mit der dritten Kurve von oben dargestellt. Dementsprechend wird kein digitales Auslöseimpuls 303 generiert, was in der Figur 3b mit der vierten Kurve von oben dargestellt ist.

In der Und-Gatter-Einrichtung 414 kann nunmehr lediglich ein Auslöseimpuls 303 registriert werden. Ein Auslöseimpuls 304 liegt nicht an. Daher wird in diesem Fall ein Ausgangssignal 305 an die Motorelektronik 7 nicht ausgegeben. Folglich wird das Rolltor 21 nicht gestoppt, da kein Hindernis 6 erkannt wurde.

### Bezugszeichen

- 1: Vorrichtung
- 2: Konstruktionselement
- 21: Rolltor
- 22: Schließkante
- 23: Führungsschiene, Rahmen

- 3: Erfassungseinrichtung
- 30: Signal, Lichtstrahl
- 30a: erster Signalteilstrahl, erster Lichtteilstrahl
- 30b: zweiter Signalteilstrahl, zweiter Lichtteilstrahl
- 30c: dritter Signalteilstrahl, dritter Lichtteilstrahl
- 31: Sendereinheit
- 311: Signalverteilereinrichtung, Signalauffächereinrichtung
- 311a: erste Verteilerfläche, Reflexionsfläche
- 311b: zweite Verteilerfläche, Reflexionsfläche
- 311c: dritte Verteilerfläche, Reflexionsfläche
- 32: Empfängereinheit
- 321: Signalbündeleinrichtung
- 321a: erste Bündelfläche, Reflexionsfläche
- 321b: zweite Bündelfläche, Reflexionsfläche
- 321c: dritte Bündelfläche, Reflexionsfläche
- 33: Signalstärke
- 34: Änderungsgeschwindigkeit
- 35: Abstrahlwinkel, Lichtkegel
- 36: direkter Lichtstrahl
- 37: reflektierter Lichtstrahl
- 38: äußerer Lichtstrahl am Lichtkegel

- 4: Steuerungseinrichtung
- 41: Auswerteeinheit
- 411: erste Schwellenwertmesseinrichtung
- 411a: Schwellenwert der Signalstärke
- 412: zweite Schwellenwertmesseinrichtung
- 412a: Schwellenwert der Änderungsgeschwindigkeit
- 413: Differentiationseinrichtung
- 42: Mikroprozessor
- 43: Freigabemodul
- 44: Schalter

- 301: Analogsignal entsprechend der Signalstärke
- 302: Analogsignal
- 303: Digitalsignal, Auslöseimpuls
- 304: Digitalsignal, Auslöseimpuls
- 305: Steuersignal

- 500: Bewegung des Konstruktionselements

- 6: Hindernis
- 61: Durchfahrt

- 7: Motorelektronik

## Patentansprüche

1. Vorrichtung (1) zur Überwachung einer Maschinenbewegung (500) eines beweglichen Konstruktionselements (2) mit
einer Erfassungseinrichtung (3), die zumindest
eine Sendereinheit (31) zum Senden eines optischen Signals (30) und eine Empfängereinheit (32) zum Empfangen des optischen Signals (30) aufweist, und
einer Steuerungseinrichtung (4), die bei Vorliegen eines an der Empfängereinheit (32) empfangenen Signals (30) die Maschinenbewegung (500) freigibt und bei Ausbleiben eines an der Empfängereinheit (32) empfangenen Signals (30) einen Auslöseimpuls (305) zum Stoppen der Maschinenbewegung (500) ausgibt,
wobei die Steuerungseinrichtung (4) eine Auswerteeinheit (41) zum Auswerten des an der Empfängereinheit (32) empfangenen Signals (30) aufweist,
und die Auswerteeinheit (41) eine erste Schwellenwertmesseinrichtung (411) umfasst, die geeignet ist, eine Signalstärke (33) des an der Empfängereinheit (32) empfangenen Signals (30) zu erfassen und bei Detektieren einer Unterschreitung eines vorgegebenen Schwellenwertes (411a) der Signalstärke (33) einen Auslöseimpuls (304) zum Stoppen der Maschinenbewegung (500) ausgibt, **dadurch gekennzeichnet, dass** die Auswerteeinheit (41) eine zweite Schwellenwertmesseinrichtung (412) aufweist, die geeignet ist, eine Änderungsgeschwindigkeit (34) der Signalstärke (33) des an der Empfängereinheit (32) empfangenen Signals (30) zu erfassen und bei Detektieren einer Überschreitung eines vorgegebenen Schwellenwertes (412a) der Änderungsgeschwindigkeit (34) der Signalstärke (33) einen Auslöseimpuls (303) zum Stoppen der Maschinenbewegung (500) ausgibt.

2. Vorrichtung (1) nach Anspruch 1, **dadurch gekennzeichnet, dass** die Auswerteeinheit (41) eine Differentiationseinrichtung (413) aufweist, die der zweiten Schwellenwertmesseinrichtung (412) vorgeschaltet ist und die geeignet ist, eine Änderungsgeschwindigkeit (34) der Signalstärke (33) des an der Empfängereinheit (32) empfangenen Signals (30) in ein amplitudenförmiges Ausgangssignal (302) umzuwandeln.

3. Vorrichtung (1) nach einem der Ansprüche 1 oder 2, **dadurch gekennzeichnet, dass**
die erste Schwellenwertmesseinrichtung (411) und die zweite Schwellenwertmesseinrichtung (412) derart verschaltet sind, dass zum Stoppen der Maschinenbewegung (500) ein Auslöseimpuls (303, 304) sowohl von der ersten Schwellenwertmesseinrichtung (411) als auch von der zweiten Schwellenwertmesseinrichtung (412) ausgeben sein muss.

4. Vorrichtung (1) nach einem der voranstehenden Ansprüche, **dadurch gekennzeichnet, dass**
die erste Schwellenwertmesseinrichtung (411) und/oder die zweite Schwellenwertmesseinrichtung (412) geeignet sind, ein eingehendes Analogsignal (301, 302) in ein ausgehendes Digitalsignal (303, 304) umzuwandeln.

5. Vorrichtung (1) nach einem der voranstehenden Ansprüche, **dadurch gekennzeichnet, dass**
die erste Schwellenwertmesseinrichtung (411) und/oder die zweite Schwellenwertmesseinrichtung (412) in einem Mikroprozessor (42) integriert sind.

6. Vorrichtung (1) nach einem der voranstehenden Ansprüche, **dadurch gekennzeichnet, dass**
die Auswerteeinheit (41) ein Zeitmodul umfasst, das geeignet ist, die Dauer der Unterschreitung des Schwellenwertes (411a) der Signalstärke (33) und/oder der Überschreitung des Schwellenwertes (412a) der Änderungsgeschwindigkeit (34) zu erfassen, und bei Detektieren einer Überschreitung einer vorgegebenen Mindestdauer einen Auslöseimpuls ausgibt.

7. Vorrichtung (1) nach einem der voranstehenden Ansprüche, **dadurch gekennzeichnet, dass**
die Steuerungseinrichtung (4) und/oder die Auswerteeinheit (41) in der Erfassungseinrichtung (3) integriert sind.

8. Vorrichtung (1) nach einem der voranstehenden Ansprüche, **dadurch gekennzeichnet, dass**
die Erfassungseinrichtung (3) und/oder die Steuerungseinrichtung (4) an einem Tor (21) angeordnet sind.

9. Vorrichtung (1) nach einem der voranstehenden Ansprüche, **dadurch gekennzeichnet, dass**
die Erfassungseinrichtung (3) eine Lichtschranke, ein Lichtgitter oder ein Lichtvorhang ist.

10. Vorrichtung (1) nach einem der voranstehenden Ansprüche, **dadurch gekennzeichnet, dass**
die Erfassungseinrichtung (3) zumindest zwei Sendereinheiten (31) und/oder zumindest zwei Empfängereinheiten (32) umfasst.

11. Vorrichtung (1) nach Anspruch 10, **dadurch gekennzeichnet, dass** die Sendereinheiten (31) und/oder die Empfängereinheiten (32) über einen Schalter (44) zeitgleich aktivierbar sind.

12. Vorrichtung (1) nach einem der voranstehenden Ansprüche, **dadurch gekennzeichnet, dass**
senderseitig eine Signalverteilereinrichtung (311) vorgesehen ist, die das Signal (30) in zumindest zwei Signalteilstrahlen (30a, 30b, 30c) unterteilt.

13. Vorrichtung (1) nach einem der voranstehenden Ansprüche, **dadurch gekennzeichnet, dass**
empfängerseitig eine Signalbündeleinrichtung (321) vorgesehen ist, die zumindest zwei Signalteilstrahlen (30a, 30b, 30c) zu dem Signal (30) bündelt.

14. Vorrichtung (1) nach einem der Ansprüche 12 oder 13, **dadurch gekennzeichnet, dass**
die Signalverteilereinrichtung (311) und/oder die Signalbündeleinrichtung (321) jeweils eine Anordnung von zumindest einer Reflexionsfläche (311a, 311b, 311c, 321a, 321b, 321c) ist.

15. Vorrichtung (1) nach einem der voranstehenden Ansprüche, **dadurch gekennzeichnet, dass**
die Sendereinheit (31) und/oder die Empfängereinheit (32) innerhalb einer Führungsschiene (23) angeordnet sind, in der das Konstruktionselement (2) bewegbar gelagert ist.

16. Verfahren zum Überwachen einer Maschinenbewegung (500) eines beweglichen Konstruktionselements (2) mit den folgenden Schritten:
- Senden eines Signals (30) von einer Sendereinheit (31),
- Empfangen zumindest eines Teils des Signals (30) an einer Empfängereinheit (32),
- Auswerten des an der Empfängereinheit (32) empfangenen Signals (30) in einer ersten Schwellenwertmesseinrichtung (411) und bei Detektieren einer Unterschreitung eines vorgegebenen Schwellenwertes (411a) einer Signalstärke (33) des empfangenen Signals (30) Ausgeben eines Auslöseimpulses (304) zum Stoppen der Maschinenbewegung (500) an die Steuerungseinrichtung (4),
- Auswerten des an der Empfängereinheit (32) empfangenen Signals (30) in einer zweiten Schwellenwertmesseinrichtung (412) und bei Detektieren einer Überschreitung eines vorgegebenen Schwellenwertes (412a) einer Änderungsgeschwindigkeit (34) der Signalstärke (33) des empfangenen Signals (30) Ausgeben eines Auslöseimpulses (303) zum Stoppen der Maschinenbewegung (500) an die Steuerungseinrichtung (4), und
- Verknüpfen der von der ersten Schwellenwertmesseinrichtung (411) und der zweiten Schwellenwertmesseinrichtung (412) ausgegebenen Auslöseimpulse (303, 304) in einer Und-Gatter-Einrichtung (414), und bei Vorliegen eines Auslöseimpulses (303, 304) von sowohl der ersten Schwellenwertmesseinrichtung (411) als auch von der zweiten Schwellenwertmesseinrichtung (412) erfolgt ein Ausgeben eines Auslösesignals (305) zum Stoppen der Maschinenbewegung (500) an eine Motorelektronik 7.

17. Verfahren nach Anspruch 16, **dadurch gekennzeichnet, dass**
bei dem Auswerten des an der Empfängereinheit (32) empfangenen Signals (30) die Dauer der Unterschreitung des Schwellenwertes (411a) der Signalstärke (33) und/oder der Überschreitung des Schwellenwertes (412a) der Änderungsgeschwindigkeit (34) erfasst wird, und bei Detektieren einer Überschreitung einer vorgegebenen Mindestdauer ein Ausgeben eines Auslöseimpuls erfolgt.

18. Verfahren nach einem der Ansprüche 16 oder 17, **dadurch gekennzeichnet, dass**
der Schwellenwert (411a) der Signalstärke (33) und/oder der Schwellenwert (412a) der Änderungsgeschwindigkeit (34) als Anteil eines Mittelwertes berechnet wird.

19. Verfahren nach einem der Ansprüche 16 bis 18, **dadurch gekennzeichnet, dass**
nach dem Senden des Signals (30) eine Auffächerung des Signals (30) in zumindest zwei separate Signaltellstrahlen (30a, 30b, 30c) erfolgt.

20. Verfahren nach einem der Ansprüche 16 bis 19, **dadurch gekennzeichnet, dass**
vor dem Empfangen des Signals (30) eine Bündelung von zumindest zwei separaten Signalteilstrahlen (30a, 30b, 30c) zu dem Signal (30) erfolgt.

21. Verfahren nach einem der Ansprüche 16 bis 20, **dadurch gekennzeichnet, dass**
bei dem Auswerten des an der Empfängereinheit (32) empfangenen Signals (30) eine Überlagerung und/oder Reflexion benachbarter Signalteilstrahlen (30a, 30b, 30c) berücksichtigt wird.

## Claims

1. A device (1) for monitoring a machine movement (500) of a movable constructional element (2), the device comprising:
a detection device (3) comprising at least one transmission unit (31) configured to transmit an optical signal (30), and a reception unit (32) configured to receive the optical signal (30); and
a control device (4) configured to allow the machine movement (500) in the presence of a signal (30) received at the reception unit (32), and, to output a triggering pulse (305) to stop the machine movement (500) in the absence of the signal (30) received at the reception unit (32),
wherein the control device (4) comprises an evaluation unit (41) configured to evaluate the signal (30) received at the reception unit (32),
and the evaluation unit (41) comprises a first threshold value measuring unit (411) configured to detect a signal strength (33) of the signal (30) received at the reception unit (32) and which, upon detection that a predetermined threshold value (411a) of a signal strength (33) is fallen short of, is configured to output a second triggering pulse (304) to stop the machine movement (500),
**characterized in that**
the evaluation unit (41) further comprises a second threshold value measuring unit (412) configured to detect a rate of change (34) of the signal strength (33) of the signal (30) received at the reception unit (32) and which unit is configured to output a triggering pulse (303) to stop the machine movement (500) upon detection that a predetermined threshold value (412a) of the rate of change (34) of the signal strength (33) is exceeded,.

2. The device (1) as recited in claim 1, **characterized in that** the evaluation unit (41) comprises a differentiation device (413) connected upstream of the second threshold value measuring unit (412), the differentiation device being configured to convert the rate of change (34) of the signal strength (33) of the signal (30) received at the reception unit (32) into an amplitude-shaped output signal (302).

3. The device (1) as recited in one of claims 1 or 2, **characterized in that** the first threshold value measuring unit (411) and the second threshold value measuring unit (412) are connected so that, to stop the machine movement (500), a triggering pulse (303, 304) has to be output by both the first threshold value measuring unit (411) and the second threshold value measuring unit (412).

4. The device (1) as recited in one of the preceding claims, **characterized in that** at least one of the first threshold value measuring unit (411) and the second threshold value measuring unit (412) is configured to transform a received analog signal (301, 302) into an output digital signal (303, 304).

5. The device (1) as recited in one of the preceding claims, **characterized in that** at least one of the first threshold value measuring unit (411) and the second threshold value measuring unit (412) is integrated in a microprocessor (42).

6. The device (1) as recited in one of the preceding claims, **characterized in that** the evaluation unit (41) comprises a time module configured to detect a duration of at least one of the falling short of the threshold value (412a) of the signal strength (33) and the exceeding of the threshold value (412a) of the rate of change (34), and to output a triggering pulse when a predetermined minimum duration is exceeded.

7. The device (1) as recited in one of the preceding claims, **characterized in that** at least one of the control device (4) and the evaluation unit (41) is integrated into the detection device (3).

8. The device (1) as recited in one of the preceding claims, **characterized in that** at least one of the detection device (3) and the control device (4) is arranged on a gate (21).

9. The device (1) as recited in one of the preceding claims, **characterized in that** the detection device (3) is provided as a light barrier, a light grid, or a light curtain.

10. The device (1) as recited in one of the preceding claims, **characterized in that** the detection device (3) comprises at least one of at least two transmission units (31) and at least two reception units (32).

11. The device (1) as recited in claim 10, **characterized in that** at least one of the transmission units (31) and the reception units (32) is configured to be activated at a same time via switch (44).

12. The device (1) as recited in one of the preceding claims, **characterized in that** a signal distributor device (311) is provided on the transmitter side, the device dividing the signal (30) into at least two signal partial beams (30a, 30b, 30c).

13. The device (1) as recited in one of the preceding claims, **characterized in that** a signal bundling device (321) is provided on the receiver side, which device bundles the at least two signal partial beams (30a, 30b, 30c) into the optical signal (30).

14. The device (1) as recited in one of the preceding claims, **characterized in that** at least one of the signal distributor device (311) and the signal bundling device (321) is respectively provided as an arrangement comprising at least one reflection surface (311a, 311b, 311c, 321a, 321b, 321c).

15. The device (1) as recited in one of the preceding claims, **characterized in that** at least one of the transmission unit (31) and the reception unit (32) are arranged in a guide rail (23) in which the constructional element (2) is movably supported.

16. A method for monitoring a machine movement (500) of a movable constructional element (2), the method comprising:
- transmitting a signal (30) from a transmission unit (31),
- receiving at least a part of the signal (30) at a reception unit (32),
- evaluating the signal (30) received at the reception unit (32) in a first threshold value measuring unit (411) and, upon detection that a predetermined threshold value (411a) of a signal strength (33) of the received signal (30) is fallen short of, outputting a triggering pulse (304) to a control device (4) to stop the machine movement (500),
- evaluating the signal (30) received at the reception unit (32) in a second threshold value measuring unit (412) and, upon detection that a predetermined threshold value (412a) of a rate of change (34) of the signal strength (33) of the received signal (30) is exceeded, outputting a triggering pulse (303) to the control device (4) to stop the machine movement (500), and
- interlinking in an AND gate device (414) the triggering pulses (303, 304) outputted by the first threshold value measuring unit (411) and the second threshold value measuring unit (412), and, upon occurrence of a triggering pulse (403, 404) from both the first threshold value measuring unit (411) and the second threshold value measuring unit (412), outputting a triggering signal (305) to a motor electronics (7) to stop the machine movement (500).

17. The method as recited in claim 16, **characterized in that**, when evaluating the signal (30) received at the reception unit (32), a duration of at least one of the falling short of the threshold value (411a) of the signal strength (33) and the exceeding of the threshold value (412a) of the rate of change (34) is detected and, upon detection of an exceeding of a predetermined minimum duration, a triggering signal is outputted.

18. The method as recited in one of claims 16 or 17, **characterized in that** at least one of the threshold value (411a) of the signal strength (33) and the threshold value (412a) of the rate of change (34) is computed as a portion of an average value.

19. The method as recited in one of claims 16 to 18, **characterized in that**, after transmitting the signal (30), the signal (30) is spread into at least two separate signal partial beams (30a, 30b, 30c).

20. The method as recited in one of claims 16 to 19, **characterized in that**, prior to receiving the signal (30), at least two separate signal partial beams (30a, 30b, 30c) are bundled into the signal (30).

21. The method as recited in one of claims 16 to 20, **characterized in that**, upon evaluation of the signal (30) received at the reception unit (32), at least one of a superposition and a reflection of the at least two adjacent signal partial beams (30a, 30b 30c) is considered.

## Revendications

1. Dispositif (1) de surveillance d'un mouvement de machine (500) d'un élément de construction (2) mobil, comportant
un moyen de détection (3) comportant au moins une unité émettrice (31) pour l'émission d'un signal optique (30), et une unité réceptrice (32) pour la réception dudit signal optique (30), et
un moyen de commande (4) qui, en présence d'un signal (30) reçu à l'unité réceptrice (32), permet le mouvement de machine (500) et, en absence d'un signal (30) reçu à l'unité réceptrice (32), fournit une impulsion de déclenchement (305) pour arrêter le mouvement de machine (500),
le moyen de commande (4) comportant une unité d'évaluation (41) pour évaluer le signal (30) reçu à l'unité réceptrice (32),
et l'unité d'évaluation (41) comportant un premier moyen de mesure du seuil (411) apte à détecter une intensité de signal (33) du signal (30) reçu à l'unité réceptrice (32) et, lors d'une détection d'un sous-dépassement d'un seuil (411a) prédéterminé de l'intensité de signal (33), fournissant une impulsion de déclenchement (304) pour arrêter le mouvement de machine (500),
**caractérisé en ce que**
l'unité d'évaluation (41) comporte un deuxième moyen de mesure du seuil (412) apte à détecter un taux de variation (34) de l'intensité de signal (33) du signal (30) reçu à l'unité réceptrice (32) et, lors d'une détection d'un dépassement d'un seuil (412a) prédéterminé du taux de variation (34) de l'intensité de signal (33), fournit une impulsion de déclenchement (303) pour arrêter le mouvement de machine (500).

2. Dispositif (1) selon la revendication 1, **caractérisé en ce que** l'unité d'évaluation (41) comporte un moyen de différentiation (413) qui est connecté en amont du deuxième moyen de mesure du seuil (412) et qui est apte à transformer un taux de variation (34) de l'intensité de signal (33) du signal (30) reçu à l'unité réceptrice (32) en un signal de sortie (302) sous forme d'une amplitude.

3. Dispositif (1) selon l'une quelconque des revendications 1 ou 2, **caractérisé en ce que** le premier moyen de mesure du seuil (411) et le deuxième moyen de mesure du seuil (412) sont connectés de sorte que, pour arrêter le mouvement de machine (500), une impulsion de déclenchement (303, 304) doit être fournie par le premier moyen de mesure du seuil (411) et le deuxième moyen de mesure du seuil (412).

4. Dispositif (1) selon l'une quelconque des revendications précédentes, **caractérisé en ce que** le premier moyen de mesure du seuil (411) et/ou le deuxième moyen de mesure du seuil (412) sont aptes à transformer un signal analogue (301, 302) d'entrée en un signal numérique (303, 304) de sortie.

5. Dispositif (1) selon l'une quelconque des revendications précédentes, **caractérisé en ce que** le premier moyen de mesure du seuil (411) et/ou le deuxième moyen de mesure du seuil (412) sont intégrés dans un microprocesseur (42).

6. Dispositif (1) selon l'une quelconque des revendications précédentes, **caractérisé en ce que** l'unité d'évaluation (41) comporte un module de temporisation apte à détecter la durée d'un sous-dépassement d'un seuil (411a) prédéterminé de l'intensité de signal (33) et/ou d'un dépassement d'un seuil (412a) prédéterminé du taux de variation (34) de l'intensité de signal (33), et fournit une impulsion de déclenchement lors de la détection d'un dépassement.

7. Dispositif (1) selon l'une quelconque des revendications précédentes, **caractérisé en ce que** le moyen de commande (4) et/ou l'unité d'évaluation (41) est intégré dans le moyen de détection (3).

8. Dispositif (1) selon l'une quelconque des revendications précédentes, **caractérisé en ce que** le moyen de détection (3) et/ou le moyen de commande (4) sont disposés sur une porte (21).

9. Dispositif (1) selon l'une quelconque des revendications précédentes, **caractérisé en ce que** le moyen de détection (3) est une barrière lumineuse, une barrière immatérielle ou un rideau lumineux.

10. Dispositif (1) selon l'une quelconque des revendications précédentes, **caractérisé en ce que** le moyen de détection (3) comporte au moins deux unités émettrices (31) et/ou au moins deux unités réceptrices (32).

11. Dispositif (1) selon la revendication 10, **caractérisé en ce que** les unités émettrices (31) et/ou les unités réceptrices (32) peuvent être activées simultanément par un interrupteur (44).

12. Dispositif (1) selon l'une quelconque des revendications précédentes, **caractérisé en ce que** un moyen de distribution de signaux (311) est prévu, côté émetteur, séparant le signal (30) en au moins deux faisceaux de signal partielles (30a, 30b, 30c).

13. Dispositif (1) selon l'une quelconque des revendications précédentes, **caractérisé en ce que** un moyen de concentration de signaux (321) est prévu, côté récepteur, concentrant les au moins deux faisceaux de signal partielles (30a, 30b, 30c) pour former ledit signal (30).

14. Dispositif (1) selon l'une quelconque des revendications 12 ou 13, **caractérisé en ce que** le moyen de distribution de signaux (311) et/ou le moyen de concentration de signaux (321) sont chacun un arrangement d'au moins une face de réflexion (311a, 311b, 311c, 321a, 321b, 321c).

15. Dispositif (1) selon l'une quelconque des revendications précédentes, **caractérisé en ce que** l'unité émettrice (31) et/ou l'unité réceptrice (32) sont disposées dans un rail de guidage (23) dans lequel ledit élément de construction (2) est supporté de façon à être mobil.

16. Procédé de surveillance d'un mouvement de machine (500) d'un élément de construction (2) mobil, avec les étapes suivantes:
- l'émission d'un signal (30) par une unité émettrice (31),
- la réception d'au moins une partie du signal (30) à une unité réceptrice (32),
- l'évaluation du signal (30) reçu à l'unité réceptrice (32) dans un premier moyen de mesure du seuil (411) et, lors d'une détection d'un sous-dépassement d'un seuil (411a) prédéterminé de l'intensité de signal (33) du signal reçu (30), l'émission d'une impulsion de déclenchement (304) au moyen de commande (4) pour arrêter le mouvement de machine (500),
- l'évaluation du signal (30) reçu à l'unité réceptrice (32) dans un deuxième moyen de mesure du seuil (412) et, lors d'une détection d'un dépassement d'un seuil (412a) prédéterminé d'un taux de variation (34) de l'intensité de signal (33) du signal reçu (30), l'émission d'une impulsion de déclenchement (303) au moyen de commande (4) pour arrêter le mouvement de machine (500),
- la combinaison des impulsions de déclenchement (303, 304) fournies par le premier moyen de mesure du seuil (411) et le deuxième moyen de mesure du seuil (412) dans un moyen de porte ET (414), et en présence d'une impulsion de déclenchement (303, 304) de la part du premier moyen de mesure du seuil (411) et du deuxième moyen de mesure du seuil (412), l'émission d'un signal de déclenchement (305) à une électronique du moteur (7) pour arrêter le mouvement de machine (500).

17. Procédé selon la revendication 16, **caractérisé en ce que** l'évaluation du signal (30) reçu à l'unité réceptrice (32) prend en compte la durée d'un sous-dépassement d'un seuil (411a) de l'intensité de signal (33) et/ou d'un dépassement d'un seuil (412a) du taux de variation (34), et **en ce qu'**une impulsion de déclenchement est fournie lors de la détection d'un dépassement.

18. Procédé selon l'une quelconque des revendications 16 et 17, **caractérisé en ce que** le seuil (411a) de l'intensité de signal (33) et/ou le seuil (412a) du taux de variation (34) sont calculés comme part d'une valeur moyenne.

19. Procédé selon l'une quelconque des revendications 16 à 18, **caractérisé en ce qu'**après l'émission du signal (30), le signal (30) est dispersé en au moins deux faisceaux de signal partielles (30a, 30b, 30c) séparées.

20. Procédé selon l'une quelconque des revendications 16 à 19, **caractérisé en ce qu'**avant le signal (30) est reçu, au moins deux faisceaux de signal partielles (30a, 30b, 30c) séparées sont combinés pour former le signal (30).

21. Procédé selon l'une quelconque des revendications 16 à 20, **caractérisé en ce que** lors de l'évaluation du signal (30) reçu à l'unité réceptrice (32), on prend en compte une superposition et/ou une réflexion de faisceaux de signal partielles (30a, 30b, 30c) adjacentes.
